# EUROPÄISCHE PATENTSCHRIFT

(11) **EP 0 507 053 B1**
(45) Veröffentlichungstag und Bekanntmachung des Hinweises auf die Patenterteilung: **02.08.1995**
(21) Anmeldenummer: 92101692.9
(22) Anmeldetag: 01.02.1992
(51) Int. Cl.: C08G 18/67, C08G 18/75, C08G 18/78

(54) **Wässrige, strahlenhärtbare Urethanacrylatdispersionen**
Aqueous, photocurable urethaneacrylate dispersions
Dispersions aqueuses d'uréthaneacrylate photodurcissables

(30) Priorität: 04.04.1991 DE 4110821
(43) Veröffentlichungstag der Anmeldung: 07.10.1992
(73) Patentinhaber: HÜLS AKTIENGESELLSCHAFT, 45764 Marl (DE)
(72) Erfinder: Flakus, Werner, Dr., W-4350 Recklinghausen (DE)

(56) Entgegenhaltungen:
- EP-A- 0 007 737
- EP-A- 0 015 593
- EP-A- 0 209 684
- EP-A- 0 381 862
- DE-A- 2 903 221

## Beschreibung

Die Erfindung betrifft die lösemittelfreie Herstellung wäßriger, strahlenhärtbarer Urethanacrylate durch Schmelzemulgierung von Umsetzungsprodukten cyclischer Polyisocyanate mit gegebenenfalls Wasser, Hydroxyethylacrylat und Polyetherpolyolen, jeweils mit Hilfe nichtionogener Tenside in Wasser.

Für die Strahlenhärtung stellen z. B. acrylierte Urethansysteme geschätzte Lackharzsysteme vor. Aus Viskositätsgründen sind Urethanacrylate nicht unmittelbar zum Rakeln, Gießen oder Spritzen zu verwenden, sondern erfordern entsprechende Formulierungen mit Hilfe niedrigviskoser Verdünnungsmittel.

Klassische organische Lösemittel stellen zwar vorzügliche Verdünnungsmittel vor, müssen aber vor der Strahlenhärtung vergleichsweise nutzlos abgedampft werden.

Niedermolekulare Olefine sind z. B. aufgrund ihres Lösemittelcharakters vorzügliche Verdünner oder Viskositätsregulatoren, werden vor der Härtung nicht abgedampft, sondern gelangen im Rahmen der Strahlenhärtung zusammen mit den gelösten Urethanacrylanteilen zur Polymerisation. Aber niedermolekulare, olefinische Verdünnungsmittel, sog. Monomere, sind toxisch, geruchsbelästigend, ökologisch nicht tragbar.

Diese Problematik, aber auch der Trend zur Rohstoff- und Energieeinsparung führten zur Entwicklung wäßriger, strahlenhärtbarer Dispersionen.

Die Dispergierung von Acrylharzen in Wasser kann sowohl mit sauren Harzsystemen und nachfolgender Neutralisation mit Basen zu anionischen Dispersionen oder mit basischen Harzen und nachfolgender Neutralisation mit Säuren zu kationischen Dispersionen vollzogen werden.

Das Leistungsbild der wäßrigen, ionischen lösemittelfreien Systeme ist recht gut und vielseitig, zeigt aber naturgemäß auch Unzulänglichkeiten im Vergleich mit aus lösemittelhaltigen Systemen applizierten Oberflächenbeschichtungen.

In Anbetracht der Einsparung organischer Lösemittel und mit Blick auf die Erschließung ökologisch vorbildlicher Applikationsfelder sind Wasserlacke zwar auf breiter Front gefragt, doch wird das Leistungsbild lösemittelhaltiger Lacksysteme zwangsläufig zum Maßstab der Bewertung dienen, auch wenn gewisse Unzulänglichkeiten wäßriger Systeme Akzeptanz finden sollten.

Ein allgemein bekannter Schwachpunkt vieler wäßriger Systeme ist z. B. das Wasseraufnahmevermögen der gehärteten Filme, aber auch die Wetterstabilität schlechthin, die weitgehend den ionischen Bestandteilen dieser Systeme zugeschrieben werden und damit die Applikationsfelder erheblich einschränken.

Es stellte sich nun die Frage, inwieweit nichtionogene Tenside in der Lage sind, hochviskose Harzsysteme von Prepolymercharakter - tunlichst ohne die Zuhilfenahme organischer Lösemittel - mit Wasser in stabile Emulsionen zu überführen.

Zunächst ist es möglich, solche Harze mit Hilfe von z. B. Alkylphenoxylaten oder von Polyetherpolyolen in Wasser - frei von organischen Lösemitteln - zu dispergieren, aber die Haltbarkeit solcher Zubereitungen ist auf Stunden oder 1 - 2 Tagen beschränkt und erfordert eine umgehende Applikation.

Es zeigte sich auch, daß vorgenannte wäßrige Zubereitungen durch z. B. Polyurethan-Verdicker, die im Handel erhältlich sind, in der Haltbarkeit verbessert werden. Nach physikalischer Trocknung und Strahlenhärtung solcher Systeme erhält man transparente Filme, die eine gute Lösemittelbeständigkeit, aber eine geringe Haftung auf glatten Substraten aufweisen. Überraschenderweise ist das Wasserquellvermögen solcher Filme z. B. in 100 % relativer Luftfeuchte vielfach von gleichem Ausmaß wie im Fall ionischer, wäßriger Systeme, die Oberfläche erweicht, "blockt", d. h. die Beschichtungen sind nicht mehr stapelfähig, sie verschmutzen auch.

Bei anteilsmäßiger Verwendung wasserlöslicher aliphatischer Alkohole kann eine maßgebliche Verbesserung der Haftung nichtionogener, wäßriger Dispersionen erzielt werden, doch wird der Flammpunkt solcher Zubereitungen empfindlich herabgesetzt und es verbleiben Alkoholrestanteile in den gehärteten Beschichtungen, die gleichfalls eine Wasseraufnahme der Filme begünstigen.

Es ist also außerordentlich schwierig, aus der Struktur der Urethanacrylate auf die Konstitution eines geeigneten nichtionischen Tensids zu schließen, das verträglich ist, stabile wäßrige Emulsionen liefert sowie nach Strahlenhärtung auch die Haftung und Elastizität der Endfilme gewährleistet und keine Wasseraufnahme der Beschichtungen verursacht.

Außerdem erfordert die hohe Schmelzviskosität einschlägig bekannter präpolymerer Urethanacrylate bzw. von Urethanharnstoffacrylaten frei von organischen Lösemitteln Schmelzdispergierungen mit Tensiden und Wasser im Bereich von 100 - 120 °C, d. h. unter Druck. Im Hinblick auf die Gefahr einer thermischen Aktivierung der Acrylbindungen zur Polymerisation kann daher auf diese Produkte nicht zurückgegriffen werden.

Es zeigte sich weiterhin, daß niedermolekulare Urethanacrylate besser zu verarbeiten sind, aber mangels Harzcharakters harte, nicht haftende Filme liefern. Auch macht es die Viskositätslage der Urethanacrylate außerordentlich schwierig, ohne organische Verdünnung z. B. partielle Harnstoffbildung mittels Diaminen auszuführen. Die Reaktion ist außerordentlich heftig, der Viskositätsanstieg so beträchtlich, daß die Rührung ausfällt und das Präpolymer infolge von Wärmestau geliert.

Gegenstand der EP-A-0 209 684 sind lagerstabile strahlenhärtbare, NCO-freie, wäßrige Emulsionen auf Basis ionischer Urethanharnstoffacrylate, dadurch gekennzeichnet, daß sie aus zu 10 -60 Äquivalent-% NCO mit Hydroxyalkylacrylat,. partiell acrylierten cycloaliphatischen Polyisocyanaten, die anschließend zu 20 -75 Äquivalent-% NCO mit Polyhydroxylverbindungen, danach zu 5 -15 Äquivalent-% NCO mit Na-Salzen von Aminocarbonsäuren und schließlich mit Wasser und/oder der 1 -5 Äquivalent-% NCO entsprechenden Menge an aliphatischen Diaminen umgesetzt werden, bestehen.

Es war daher Aufgabe der Erfindung, geeignete nichtionogene Tenside mit olefinisch ungesättigten Anteilen zu finden, die mit geeigneten Urethanacrylatharzen in Copolymerisation treten, um Reemulgierbarkeit, Wasserquellvermögen aber auch Ausschwitzen des Tensids aus der Beschichtung zu verhindern.

Gelöst wurde die Aufgabe durch Einsatz von Alkoxylaten von Hexoseestern ungesättigter Fettsäuren als nichtionogenes Tensid in lösemittelfreien, wäßrigen Urethanacrylatdispersionen.

Überraschenderweise gelang es nämlich, ausgehend von cyclischen Diisocyanaten und deren partieller Umsetzung mit Wasser zum Harnstoff-diisocyanat und nachfolgender Acrylierung mit Hydroxyethylacrylat und Umsetzung mit Polyolen ein noch schmelzbares, verträgliches Urethanharnstoffdiacrylat herzustellen, das mit Wasser und den olefinische Gruppen enthaltenden Tensiden in Emulsionen zu überführen ist. Sofern man keine Harnstoffbildung wünscht, ergeben die in Abwesenheit von Wasser hergestellten Urethanacrylate mit den erfindungsgemäß eingesetzten Tensiden auch noch ein akzeptables Eigenschaftsbild. Durch die Verwendung von harnstoffhaltigen Urethanacrylaten (s. Beispiele 1 und 2) werden allerdings Reißfestigkeit, Dehnung, Erichsen-Tiefung und Pendelhärte stärker verbessert.

Gegenstand der Erfindung ist aber ein Verfahren zur Herstellung wäßriger, strahlenhärtbarer Urethanacrylatdispersionen, dadurch gekennzeichnet, daß cyclische Polyisocyanate, insbesondere Isophorondiisocyanat mit Wasser im Verhältnis von NCO-Äquivalenten : H₂O Molen wie 10 - 20 : 0 - 1, vorzugsweise von 19 : 1 unter Bildung von NCO-haltigen Harnstoffpolyisocyanaten umgesetzt, dann mit Hydroxyethylacrylat im NCO/OH Äquivalentverhältnis von 15 - 20 : 10 - 15, vorzugsweise von 19 : 13 unter Bildung von NCO-haltigen Harnstoffurethanacrylaten und mit Polyolen in Abwesenheit von Lösemitteln bei 50 - 100 °C unter Bildung von weitgehend NCO-freien Harzen weiter umgesetzt und mit nichtionogenen Tensiden aus Alkoxylaten von Hexoseestern ungesättigter Fettsäuren in Wasser dispergiert werden.

Die erfindungsgemäß hergestellten Emulsionen bilden nach Trocknung und Strahlenhärtung harte oder auch weiche, lösemittelbeständige Filme aus.

### Reaktionsschema:

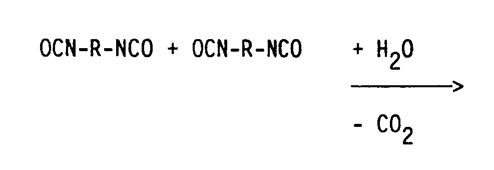

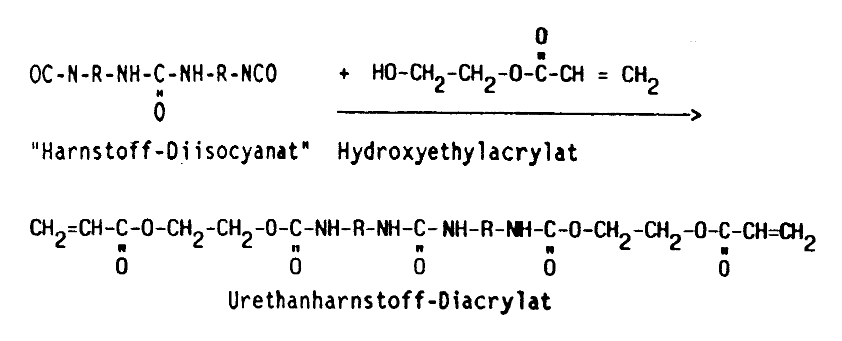

Mit weiteren freien NCO-Gruppen aus überschüssigem Diisocyanat oder nur partiell acrylierten Harnstoff-Diisocyanat findet dann die Umsetzung mit den Polyolen unter weiterer Urethanbildung statt. 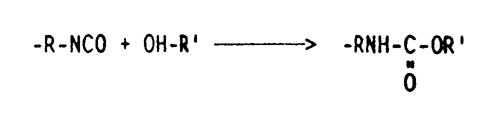
Erfindungsgemäß kann, ausgehend von cyclischen Diisocyanaten die Harnstoffbildung mit Wasser unter Ausbildung von Urethanharnstoffdiacrylaten auch erst im Rahmen der Schmelzemulgierung des Polymeren mit Tensiden und Wasser ausgeführt werden, und zwar z. B. mit bereits acrylierten noch NCO-haltigen Reaktionsprodukten, dem Schema gemäß: 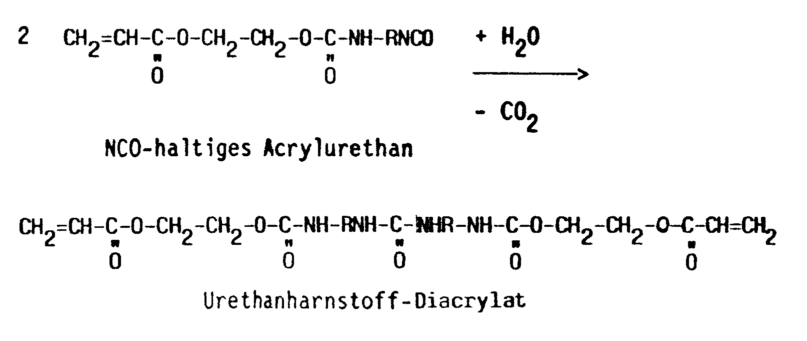
Noch vorhandene freie NCO-Gruppen aus überschüssigem Diisocyanat bzw. nur partiell acrylierten Harnstoff-Diisocyanat reagieren ebenfalls dann mit den Polyolen unter Urethanbildung.

Bei praktisch gleichwertigen Film- und Foliendaten der gehärteten Harze wird die Verfahrenszeit dabei erheblich herabgesetzt im Vergleich mit einer Harnstoffbildung in Form der 1. Reaktionsstufe.

Durch Modifizierung von Urethanharnstoffacrylaten mit einschlägigen Urethanacrylaten auf Polyol- oder Polyetherpolyol-Basis, Polyisocyanaten und Hydroxyacrylaten können harte, elastische wie auch mittelharte und weiche Harzeinstellungen eingestellt werden.

Auf der Basis der erfindungsgemäß hergestellten Harze und der zur Verwendung gelangenden Tenside ist es überraschenderweise möglich, wäßrige Zubereitungen mit ca. 75 Massen-% herzustellen, sog. "Emulsionskonzentrate", von manipulierbarer Viskositätslage.

Diese Emulsionskonzentrate können gelagert oder transportiert werden und brauchen erst vor Ort lediglich durch Zugabe von Wasser zu den entsprechenden Applikationskonzentrationen von 50 bis ggf. 10 Massen-% Feststoff maschinell verdünnt werden.

Auf diese Weise kann der Transport beträchtlicher Wasseranteile entfallen.

Der erfindungsgemäß hergestellten wäßrigen Emulsionen bilden nach Strahlenhärtung Filme von überragender Qualität aus, die üblicherweise nur von anspruchsvollen Reaktivlacksystemen nach Heißhärtung erbracht werden, wie in den Beispielen dargelegt wird.

Zur Herstellung der erfindungsgemäß beanspruchten wäßrigen, strahlenhärtbaren nichtionogenen Emulsionen sind cyclische Polyisocyanate geeignet, wie 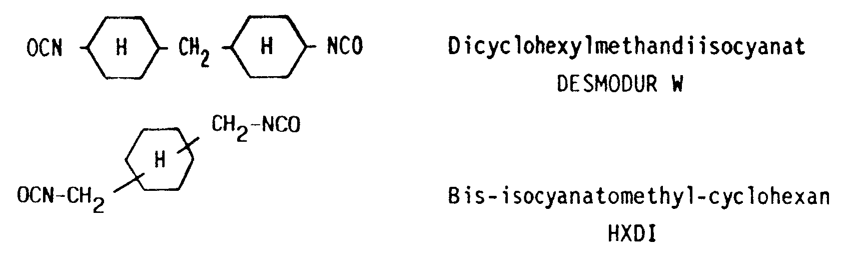
vorzugsweise, aber 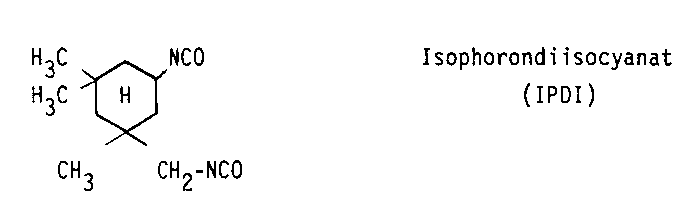
Die Ausbildung partieller Harnstoffanteile kann z. B. durch anteilmäßige Umsetzung von NCO-Äquivalenten mit H₂O erfolgen, wie vorgangs skizziert. Dabei ist es möglich, wie in den Beispielen erläutert, die Harnstoffbildung vor der Acrylierung ober bei der Emulgierung auszuführen.

Zur Herstellung der erfindungsgemäßen Emulsionen gelangen NCO und H₂O Äquivalente im Verhältnis von 20 : 1 bis 10 : 1 je nach angestrebter Filmhärte zur Umsetzung.

Die Acrylierung der Polyisocyanate erfolgt in an sich bekannter Weise mit Hydroxyethylacrylat im Verhältnis von NCO:OH = 2 : 1 bis 3 : 1.

Für die Einflußnahme der nach Strahlenhärtung resultierenden Filme und Oberflächenbeschichtungen nach Maßgabe von Oberflächenhärte und Elastizität sind neben harten Struktursegmenten auch weichere Strukturen zweckdienlich. Die erfindungsgemäß hergestellten und sodann emulgierten Präpolymere enthalten daher auch mit Polyolen, vorzugsweise mit Polyetherdiolen modifizierte Acrylurethane. Diese werden gebildet durch Umsetzungen der partiell acrylierten Polyisocyanate mit z. B. Polytetrahydrofuranetherdiolen. Das mittlere Molekulargewicht dieser Polyetherdiole beträgt etwa 650, 1000 oder 2000, sog. TERATHANE ^{R} der Fa. Du Pont. Die Umsetzung der Polyisocyanate mit letztgenannten Diolen erfolgt im Verhältnis von NCO-OH = 5 : 1 bis 4 : 1.

Zur Schmelzemulgierung der Urethanharntoffacrylate kommen Alkoxylate von Hexosen, vorzugsweise mit ungesättigten Fettsäuren verestert, zur Verwendung, die bei der Strahlenhärtung in Copolymerisation mit den Urethanacrylaten treten und lösemittelbeständige, extraktionsresistente sowie hydrophobe Filme und Beschichtungen ausbilden. Ein besonders geeignetes Tensid ist Atlas G 1350 der Fa. ICI im Bereich von 5 - 15 Massen-%, vorzugsweise von 10 Massen des Tensids (bezogen auf Harzanteil).

Die Emulgierung der Urethanharnstoffacrylate erfolgt je nach Viskosität des Harzes bei 95 - 50 °C, vorzugsweise bei 85 °C, unter Zusatz geringer Mengen an NH₄OH, KOH oder NaOH (PH-Wert 9 - 10), wobei noch vorhandene NCO-Restanteile zum Harnstoff umgesetzt werden. Nach Abkühlung der Emulsion wird z. B. mit Phosphorsäure eine pH-Wert Einstellung der Emulsion auf ca. 3 - 4 vorgenommen, die sowohl geruchslos als auch lagerstabile wäßrige Emulsionen gewährleistet.

Die erfindungsgemäß hergestellten, strahlenhärtbaren wäßrigen Dispersionen übertreffen den Stand der Technik in erheblichem Umfang:
1. Keine Verwendung organischer Hilfsmittel bei der Herstellung der Emulsionen.
2. Kein Gehalt an organischen Lösemitteln als Hilfsmittel der Filmbildung oder der Lagerstabilität.
3. Die erfindungsgemäß hergestellten Emulsionen sind praktisch geruchslos und bilden nach Trocknung und Strahlenhärtung sowohl wasserfeste wie lösemittelresistente Filme und Beschichtungen von sehr guten mechanischen Prädikaten.
4. Die erfindungsgemäß hergestellten Systeme können mit hohem Feststoffgehalt von 75 Massen-% als sog. Emulsionskonzentrate, aber auch in wäßriger Verdünnung von 50 - 10 Massen-% Feststoff zubereitet und verwendet werden.

### Beispiel 1: Urethanharnstoffacrylatdispersion

### Basis: Isophorondiisocyanat-Harnstoff-Polyether/Polyol (Harnstoffbildung durch partielle Umsetzung von Isophorondiisocyanat mit H₂O gemäß Reaktionsschema, vor der Acrylierung)

In eine Vorlage von 1 054 g Isophorondiisocyanat (4,75 Mol) werden bei 80-90 °C unter Rühren - nach Maßgabe der CO₂-Abspaltung - allmählich 9 g Wasser (0,5 Mol) eingetragen, bis das Reaktionsgut einen NCO-Gehalt von 34,3 Massen-% aufweist. Nach Zusatz von 0,18 g Dibutylzinndilaurat (DBTL), 1,26 g 2.6-Di-tert.-butyl-4-methylphenol (IONOL ^{R} CP), 19,7 g TINUVIN ^{R} 292 (Hals-Stabilisator der Firma Ciba-Geigy), 7,4 g TINUVIN ^{R} 900 (Benztriazol-Stabilisator der Firma Ciba-Geigy), 4,9 g IRGANOX ^{R} 1010 (phenolischer Stabilisator der Firma Ciba-Geigy) werden unter Rühren innerhalb von 30 Minuten 766,1 g 2-Hydroxyethylacrylat (6,5 Mol OH-Z 476 mgKOH/g) zugetropft. Reaktionstemperatur 25 - 35 °C. Nachreaktionszeit 30 Minuten.

Anschließend werden in den Reaktor innerhalb von ca. 1 Stunde unter Rührung eine Schmelze von 656,1 g Polytetrahydrofuranetherdiol (1 Mol, MG ca. 650, OH-Z 171 mgKOH/g, TERATHANE ^{R} 650 der Fa. Du Pont) sowie 0,56 g DBTL zugepumpt.

Reaktionstemperatur 35 - 50 °C (beim Eintragen der Polyole) nachfolgend 60 - 80 - 90 °C bis zur vollständigen Umsetzung des Polyoles zum NCO-Gehalt < 0,2 Massen-%.

In dem weitgehend NCO-freien Präpolymer von 90 °C werden 250 g ATLAS ^{R} G 1350 (Handelsprodukt der Firma ICI, Alkoxylate von Hexoseestern ungesättigter Fettsäuren) unter Rührung gelöst, dann werden 945 g NH₄OH (2 Massen-%) in das Reaktionsgut eingetragen, homogenisiert und die Schmelze innerhalb von 20 - 30 Minuten mit 2 666,4 g 50 °C heißem Wasser unter Rühren verdünnt. Nach Abkühlen auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Stahlblech und Foliendaten nach Härtung der Dispersion mit 200 Watt/inch in 5 Sekunden unter Zusatz von 2 Massen-% DAROCUR ^{R} 1116 (Handelsprodukt der Fa. Merck, Fotoinitiator).

| | |
|---|---|
| Pendelhärte nach König gemäß DIN 53 157 (sec) | 157 |
| Erichsentiefung (mm) | 10,0 |
| Schichtdicke (»m) | 40 |
| Reißfestigkeit gemäß DIN 53 455 (N/mm²) | 37,8 |
| Bruchdehnung (%) | 11 |

| Lösemittelresistenz | |
|---|---|
| Reibtest mit 1 kg/cm² (rubs) | |

| Belastung: | |
|---|---|
| Aceton | > 100 (kein Angriff) |
| Xylol | > 100 (kein Angriff) |
| Methylethylketon | > 100 (kein Angriff) |
| Ethanol | > 100 (kein Angriff) |
| Waschlaugentest (4 Massen-% NaOH in Wasser, 80 °C) 1 Zyklus = 30 Minuten | > 10 |

### Beispiel 2: Urethanharnstoffacrylatdispersion

### Basis: Isophorondiisocyanat-Polyether/Polyol-Harnstoff (Harnstoffbildung mit H₂O bei der Emulgierung

In Analogie zu Beispiel 1 aber ausgehend von 1 054,5 g Isophorondiisocyanat (4,75 Mol), 0,18 g DBTL, 1,24 g IONOL ^{R} CP, 19,8 g TINUVIN ^{R} 292, 7,4 g TINUVIN ^{R} 900, 5,0 g IRGANOX ^{R} 1010, 766,1 g 2-Hydroxyethylacrylat (6,5 Mol) 656,1 g Polytetrahydrofuranetherdiol (1 Mol) und 0,56 DBTL werden zur Umsetzung gebracht. In dem NCO-gerechten Präpolymer von 1,67 Massen-% NCO werden bei 90 °C 250 g ATLAS ^{R} G 1350 unter Rührung gelöst.

Dann werden 936,5 KOH 1,65 (Massen-%) zugegeben, sodann 2 667,5 Wasser (50 °C) eingetragen und unter Rührung homogenisiert. Nach Abkühlung auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Stahlblech- und Foliendaten nach Härtung der Dispersion mit 200 Watt/inch in 5 Sekunden unter Zusatz von Massen-% Darocur ^{R} 1116.

| | |
|---|---|
| Pendelhärte nach König gemäß DIN 53 157 (sec) | 146 |
| Erichsentiefung (mm) | 8,3 |
| Schichtdicke (»m) | 40 - 50 |
| Reißfestigkeit gemäß DIN 53 455 (N/mm²) | 45 |
| Bruchdehnung (%) | 7 |

| Lösemittelresistenz | |
|---|---|
| Reibtest mit 1 kg/cm² (rubs) | |

| Belastung: | |
|---|---|
| Aceton | > 100 (kein Angriff) |
| Xylol | > 100 (kein Angriff) |
| Methylethylketon | > 100 (kein Angriff) |
| Ethanol | > 100 (kein Angriff) |
| Waschlaugentest (4 Massen-% NaOH in Wasser, 80 °C) 1 Zyklus = 30 Minuten | > 10 |

### Beispiel 3: Urethanacrylatdispersion

### Basis: Isophorondiisocyanat-Polyether/Polyol

In Analogie zu Beispiel 1 aber ausgehend von 999 g Isophorondiisocyanat (4,5 Mol), 0,18 g DBTL, 1,24 g IONOL ^{R} CP, 19,8 g TINUVIN ^{R} 292, 7,4 g TINUVIN ^{R} 900, 5,0 g IRGANOX ^{R} 1010, 825 g 2-Hydroxyethylacrylat (7 Mol) 656,1 g Polytetrahydrofuranetherdiol (1 Mol) und 0,56 DBTL werden zur Umsetzung gebracht.

In dem weitgehend NCO-freien (< 0,2 % NCO) Präpolymer werden bei 90 °C 251,4 g ATLAS ^{R} G 1350 unter Rührung gelöst. Dann werden 950 g NH₄OH (2 Massen-%) und schließlich 2 686 g Wasser von 50 °C eingetragen und unter Rührung homogenisiert. Nach Abkühlung auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Stahlblech- und Foliendaten nach Härtung der Dispersion mit 200 Watt/inch in 5 Sekunden unter Zusatz von 2 Massen-% DAROCUR ^{R} 1116.

| | |
|---|---|
| Pendelhärte nach König gemäß DIN 53 157 (sec) | 103 |
| Erichsentiefung (mm) | 8,3 |
| Schichtdicke (»m) | 70 |
| Reißfestigkeit nach DIN 53 455 (N/mm²) | 43 |
| Bruchdehnung (%) | 9 |

| Lösemittelresistenz | |
|---|---|
| Reibtest mit 1 kg/cm² (rubs) | |

| Belastung: | |
|---|---|
| Aceton | > 100 (kein Angriff) |
| Xylol | > 100 (kein Angriff) |
| Methylethylketon | > 100 (kein Angriff) |
| Ethanol | > 100 (kein Angriff) |
| Waschlaugentest (4 Massen-% NaOH in Wasser, 80 °C) 1 Zyklus = 30 Minuten | > 10 |

### Beispiel 4: Urethanacrylatdispersion

### Basis: Isophorondiisocyanat-Polyether/Polyol Bis-Isocyanatomethylcyclohexan (HXDI) Polyether/Polyol

In Analogie zu Beispiel 1 aber ausgehend von 1 110 g Isophorondiisocyanat (5,0 Mol), 582 g Bis-Isocyanato-methylcyclohexan (HXDI) (3,0 Mol), 0,31 g DBTL, 2,38 g IONOL ^{R} CP, 38,1 g TINUVIN ^{R} 292, 14,3 g TINUVIN ^{R} 900, 9,5 g IRGANOX ^{R} 1010, 1 414,3 g 2-Hydroxyethylacrylat (12 Mol) 656,1 g Polytetrahydrofuranetherdiol (1 Mol) MG ca. 650, 993,9 g Polytetrahydrofuranetherdiol (1 Mol) MG ca. 1 000 und 1,12 g DBTL werden zur Umsetzung gebracht.

In dem weitgehend NCO-freien (< 0,2 % NCO) Präpolymer werden bei 90 °C 482,2 g ATLAS ^{R} G 1350 unter Rührung gelöst. Dann werden 1 823,8 g NH₄OH (2 Massen-%) und schließlich 5 149,5 g Wasser eingetragen und unter Rührung homogenisiert. Nach Abkühlung auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Stahlblech- und Foliendaten nach Härtung der Dispersion mit 200 Watt/inch in 5 Sekunden unter Zusatz von 2 Massen-% DAROCUR ^{R} 1116.

| | |
|---|---|
| Pendelhärte nach König gemäß DIN 53 157 (sec) | 92 |
| Erichsentiefung (mm) | 6,0 |
| Schichtdicke (»m) | |
| Reißfestigkeit nach DIN 53 455 (N/mm²) | 27,8 |
| Bruchdehnung (%) | 13 |

| Lösemittelresistenz | |
|---|---|
| Reibtest mit 1 kg/cm² (rubs) | |

| Belastung: | |
|---|---|
| Aceton | > 100 (kein Angriff) |
| Xylol | > 100 (kein Angriff) |
| Methylethylketon | > 100 (kein Angriff) |
| Ethanol | > 100 (kein Angriff) |
| Waschlaugentest (4 Massen-% NaOH in Wasser, 80 °C) 1 Zyklus = 30 Minuten | > 10 |

### Beispiel 5: Urethanacrylatdispersion

### Basis: Isophorondiisocyanat-Polyether/Polyol Dicyclohexylmethandiisocyanat (DESMODUR W)-Polyether/Polyol

In Analogie zu Beispiel 1 aber ausgehend von 1 110 g Isophorondiisocyanat (5,0 Mol), 786 g Dicyclohexylmethandiisocyanat (DESMODUR W) (3,0 Mol), 0,33 g DBTL, 2,48 g IONOL ^{R} CP, 39,7 g TINUVIN ^{R} 292, 14,9 g TINUVIN ^{R} 900, 9,9 g IRGANOX ^{R} 1010, 1 414,3 g 2-Hydroxyethylacrylat (12 Mol) 656,1 g Polytetrahydrofuranetherdiol (1 Mol, MG ca. 650), 993,9 g Polytetrahydrofuranetherdiol (1,0 Mol, MG ca. 1 000) und 1,16 g DBTL werden zur Umsetzung gebracht.

In dem weitgehend NCO-freien (< 0,2 % NCO) Präpolymer werden bei 90 °C 503 g ATLAS ^{R} G 1350 unter Rührung gelöst. Dann werden 1 900 g NH₄OH (2 Massen-%) und schließlich 5 372 g 50 °C Wasser eingetragen sowie unter Rührung homogenisiert. Nach Abkühlung auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Stahlblech- und Foliendaten nach Härtung der Dispersion mit 200 Watt/inch in 5 Sekunden unter Zusatz von 2 Massen-% DAROCUR ^{R} 1116.

| | |
|---|---|
| Pendelhärte nach König gemäß DIN 53 157 (sec) | 86 |
| Erichsentiefung (mm) | 5,9 |
| Schichtdicke (»m) | 40-50 |
| Reißfestigkeit nach DIN 53 455 (N/mm²) | 27,5 |
| Bruchdehnung (%) | 10 |

| Lösemittelresistenz | |
|---|---|
| Reibtest mit 1 kg/cm² (rubs) | |

| Belastung: | |
|---|---|
| Aceton | > 100 (kein Angriff) |
| Xylol | > 100 (kein Angriff) |
| Methylethylketon | > 100 (kein Angriff) |
| Ethanol | > 100 (kein Angriff) |
| Waschlaugentest (4 Massen-% NaOH in Wasser, 80 °C) 1 Zyklus = 30 Minuten | > 10 |

### Beispiel 6: Urethanharnstoffacrylat

### Basis: Isophorondiisocyanat-Harnstoff-Polyether/Polyol Emulsionskonzentrat 75 Massen-% Feststoff

In 2 497 g Präpolymer (hergestellt gemäß Beispiel 1) werden bei 90 °C unter Rührung 250 g ATLAS ^{R} G 1350 gelöst.

Zunächst werden 945 g NH₄OH (2 Massen-%) ca. 50 °C innerhalb von 3 - 5 Minuten eingetragen und unter Rührung homogenisiert. Nach Abkühlung auf Raumtemperatur wird das Emulsionskonzentrat abgefüllt.

| | | |
|---|---|---|
| Viskosität | 25 °C | 110 000 mPa s |
| | 50 °C | 11 350 mPa s |
| | 70 °C | 1 825 mPa s |

Zu einem gegebenen Zeitpunkt werden 3 692 g Emulsionskonzentrat von 70 °C mit 2 666,4 g Wasser von 50 °C unter Rühren verdünnt. Nach Abkühlen auf Raumtemperatur wird die Dispersion entweder unmittelbar appliziert oder je nach Substrat z. B. mit Phosphorsäure auf einen ph-Wert von 3 - 4 eingestellt, der Feststoffgehalt beträgt ca. 43 Massen-%.

Die physikalischen Daten entsprechen Beispiel 1.

## Patentansprüche

1. Verfahren zur Herstellung wäßriger, strahlenhärtbarer Urethanacrylatdispersionen,
dadurch gekennzeichnet,
daß cyclische Polyisocyanate, insbesondere Isophorondiisocyanat mit Wasser im Verhältnis von NCO-Äquivalenten : H₂O Molen wie 10 - 20 : 0 - 1, unter Bildung von NCO-haltigen Harnstoffpolyicocyanaten umgesetzt, dann mit Hydroxyethylacrylat im NCO/OH Äquivalentverhältnis von 15 - 20 : 10 - 15, unter Bildung von NCO-haltigen Harnstoffurethanacrylaten und mit Polyolen in Abwesenheit von Lösemitteln bei 50 - 100 °C unter Bildung von weitgehend NCO-freien Harzen weiter umgesetzt und mit nichtionogenen Tensiden aus Alkoxylaten von Hexoseestern ungesättigter Fettsäuren in Wasser dispergiert werden.

2. Verfahren nach Anspruch 1,
dadurch gekennzeichnet,
daß Isophorondiisocyanat mit Wasser, vorzugsweise im Verhältnis NCO-Äquivalente : H₂O Molen von 19 : 1 und mit Hydroxyethylacrylat im Äquivalentverhältnis NCO/OH von 19 : 13 umgesetzt wird.

3. Verfahren nach den Ansprüchen 1 und 2,
dadurch gekennzeichnet,
daß die Dispergierung in Wasser mit hohem Feststoffgehalt, vorzugsweise von 75 Massen-% zu Emulsionskonzentraten oder aber mit höheren Wasseranteilen zu Applikationszwecken mit Feststoffanteilen von 50 - 30 Massen-% erfolgt.

4. Verfahren nach den Ansprüchen 1 bis 3,
dadurch gekennzeichnet,
daß die partielle Harnstoffbildung mit noch NCO-haltigen Urethanacrylaten im Rahmen der Schmelzemulgierung mit Wasser erfolgt.

5. Verfahren nach den Ansprüchen 1 bis 4,
dadurch gekennzeichnet,
daß die Schmelzemulgierung mit Wasser frei von organischen Lösemitteln im alkalischen Bereich bei ph 9 - 10 unter Verwendung von Alkalien, insbesondere NH₄OH, KOH oder NaOH erfolgt.

6. Verfahren nach Anspruch 5,
dadurch gekennzeichnet,
daß die Schmelzemulgierung mit Wasser frei von organischen Lösemitteln im alkalischen Bereich bei ph 9 - 10 unter Verwendung von Alkalien, insbesondere NH₄OH, KOH oder NaOH erfolgt und das Endprodukt anschließend mit Säuren, insbesondere Phosphorsäure auf ph-Werte von 3 - 4 eingestellt wird.

## Claims

1. Process for the production of aqueous, radiation-curable urethane acrylate dispersions,
characterized in that
cyclic polyisocyanates, in particular isophorone diisocyanate, are reacted with water in the ratio of NCO equivalents : H₂O moles such as 10-20 : 0-1, with the formation of NCO-containing urea polyisocyanates, then further reacted with hydroxyethyl acrylate in the NCO/OH equivalent ratio of 15-20 : 10-15, with formation of NCO-containing urea urethane acrylates, and with polyols in the absence of solvents at 50-100°C, with the formation of largely NCO-free resins, and dispersed in water with non-ionogenic surfactants comprising alkoxylates of hexose esters of unsaturated fatty acids.

2. Process according to claim 1,
characterized in that
isophorone diisocyanate is reacted with water, preferably in the ratio of NCO equivalents : H₂O moles of 19 : 1 and with hydroxyethyl acrylate in the NCO/OH equivalent ratio of 19 : 13.

3. Process according to claims 1 and 2,
characterized in that
the dispersion takes place in water with a high solids content, preferably 75 % by weight, to give emulsion concentrates, or with higher water proportions for application purposes with solids proportions of 50-30 % by weight.

4. Process according to claims 1 to 3,
characterized in that
the partial urea formation with urethane acrylates still containing NCO within the scope of the melt emulsification takes place with water.

5. Process according to claims 1 to 4,
characterized in that
the melt emulsification takes place with water free from organic solvents in the alkaline range at pH 9-10 using alkalis, in particular NH₄OH, KOH or NaOH.

6. Process according to claim 5,
characterized in that
the melt emulsification takes place with water free from organic solvents in the alkaline range at pH 9-10 using alkalis, in particular NH₄OH, KOH or NaOH, and the end product is then adjusted to pH values of 3-4 with acids, in particular phosphoric acid.

## Revendications

1. Procédé de fabrication de dispersions aqueuses d'uréthanne-acrylates durcissables par irradiation caractérisé en ce que des polyisocyanates cycliques -en particulier le diisocyanate d'isophorone- est mis à réagir avec de l'eau dans un rapport équivalent NCO/moles d'eau comme 10-20:0-1, avec formation d'urée-polyisocyanates porteurs de NCO, puis on les fait réagir avec l'acrylate d'hydroxyethyle dans un rapport équivalent NCO/OH de 15-20:10-15 avec formation d'urée-uréthanne-acrylates porteurs de NCO et on continue à les faire réagir avec des polyols en l'absence d'agents dissolvants à 50-100°C avec formation de résines largement dépourvues de NCO et en ce qu'on les disperse dans l'eau avec des agents tensioactifs non-ionogènes à base d'alcoxylates d'esters d'hexoses d'acides gras non saturés.

2. Procédé selon la revendication 1, caractérisé en ce que l'on fait réagir le diisocyanate d'isophorone avec de l'eau, de préférence dans le rapport en équivalents de NCO/moles de H₂O de 19:1 et avec l'acrylate d'hydroxyethyle dans un rapport équivalent NCO:OH de 19:13.

3. Procédé selon les revendications 1 et 2, caractérisé en ce que la dispersion dans l'eau avec une teneur élevée en matières solides -de préférence de 75 % en masse - s'effectue pour des concentrés d'émulsion ou cependant avec des quantités plus élevées d'eau en vue des buts d'application avec des quantités de matières solides de 50 à 30 % en masse.

4. Procédé selon les revendications 1 à 3, caractérisé en ce que la formation partielle d'urée avec des uréthanne-acrylates encore porteurs de NCO, s'effectue dans le cadre de la mise en émulsion par fusion avec de l'eau.

5. Procédé selon les revendications 1 à 4, caractérisé en ce que la mise en émulsion par fusion avec de l'eau, s'effectue sans agent dissolvant organique, dans une zone alcaline à pH 9-10, par utilisation d'alcalis, en particulier NH₄ OH, KOH ou NaOH.

6. Procédé selon la revendication 5, caractérise en ce que la mise en émulsion par fusion s'effectue avec de l'eau sans agent dissolvant organique dans une zone alcaline à pH 9-10 par utilisation d'alcalis, en particulier NH₄ OH, KOH ou NaOH et que le produit final est ensuite ajusté à des valeurs de pH de 3-4 avec des acides, en particulier l'acide phosphorique.
